# DEMANDE DE BREVET EUROPEEN

(11) **EP 1 314 542 A1**
(43) Date de publication de la demande: **28.05.2003**
(21) Numéro de dépôt: 02362019.8
(22) Date de dépôt: 19.11.2002
(51) Int. Cl.: B29C 70/22

(54) **Procédé de réalisation d'une préforme textile multidirectionnelle, dispositif pour sa mise en oeuvre et préforme ainsi obtenue**

(30) Priorité: 27.11.2001 FR 0115313
(71) Demandeur: EADS LAUNCH VEHICLES, 75116 Paris (FR)
(72) Inventeur: Cahuzac, Georges, 33110 Le Bouscat (FR); Barrot, Fabien, 33200 Bordeaux (FR)
(74) Mandataire: Thébault, Jean-Louis

(57) **Abrégé**

- L'objet de l'invention est un procédé de réalisation d'une préforme textile multidirectionnelle, dans lequel on dépose sur un substrat apte au piquage (M) une première nappe de tronçons de fil, puis, éventuellement, une ou plusieurs autres nappes suivant des directions différentes, en sorte de réaliser une séquence de dépose, puis, à effectuer éventuellement une ou plusieurs autres séquences de dépose de nappes, chaque tronçon de fil (3₁, 3₂, 3₃) étant, à chaque extrémité, fixé par piquage sans nouage dans ledit substrat (M) à l'aide d'une aiguille (11, 12), caractérisé en ce que le piquage aux deux extrémités de chaque tronçon (3₁, 3₂, 3₃) est réalisé de manière indépendante à l'aide de deux aiguilles (11, 12) utilisant des fils distincts (P₁, P₂) de celui des nappes, l'extrémité du tronçon de fil étant, dès l'arrivée de la tête de dépose à hauteur de son point de rebroussement, fixée par le fil de piquage, l'aiguille de piquage enfoncée faisant office de picot d'accrochage du fil lors de la dépose du tronçon suivant, l'aiguille demeurant enfoncée au moins jusqu'à l'enfoncement de l'aiguille de piquage de l'autre extrémité dudit tronçon suivant.
- Application à la réalisation de pièces composites

## Description

La présente invention a trait à la réalisation de préformes textiles destinées à la fabrication de pièces en matériaux composites et plus particulièrement des préformes dites sèches, ou éventuellement spécialement préparées, qu'il faut ensuite densifier en infiltrant la matrice dans la préforme, quelle que soit la nature de la matrice, céramique, métallique ou organique.

On peut distinguer d'une manière générale deux familles de préformes textiles :
- celles qui sont principalement planes, la grande majorité des fils étant disposés dans un plan. Dans ce cas, il peut y avoir plusieurs directions de placement des fils dans le plan, généralement quatre directions ;
- celles qui ont des fils répartis dans les trois directions de l'espace et qui sont constituées d'une superposition de structures planaires du type de la première famille, liées transversalement.

Par fil, on entend d'une manière générale un assemblage de plusieurs milliers de fibres naturelles ou synthétiques, minérales ou organiques, par exemple de carbone, de silice, de carbone de silicium, de verre, de Kevlar, etc...

De façon générale, pour réaliser des préformes, on est amené à opérer en deux temps :
- on dépose d'abord une ou plusieurs nappes de fils dans un plan
- puis on lie les différentes nappes en plaçant des fils dans la troisième direction de l'espace.

Une des façons de déposer les nappes de fil dans le plan est d'utiliser des picots, entre lesquels on dépose des fils (tronçons de fils). Ces tronçons sont localement orientés dans une même direction. Au moment de la mise en place de la troisième direction, on retire ces picots.

Cette méthode est particulièrement intéressante car elle permet de réaliser soit des produits finis, qui peuvent être en forme, soit des semi-produits.

Une telle technique est par exemple illustrée par le brevet FR 2 718 757 au nom de la Demanderesse.

Suivant une autre manière d'opérer illustrée par le brevet FR 2 718 758 également au nom de la Demanderesse, on évite l'utilisation de picots en piquant le fil à chaque extrémité en même temps qu'il est déposé, le fil étant déposé sur un support en mousse dans lequel lesdits tronçons de fils sont fixés par piquage sans nouage à l'aide d'une aiguille.

L'inconvénient de cette technologie est que le fil de piquage, qui se trouve dans la troisième dimension de la préforme, est le même que celui qui se trouve dans les deux autres dimensions.

La présente invention vise précisément à s'affranchir de cet inconvénient en proposant une technologie permettant d'avoir dans n'importe quelle dimension un fil spécifique et donc optimisé selon le besoin.

A cet effet, l'invention a pour objet un procédé de réalisation d'une préforme textile multidirectionnelle, dans lequel on dépose sur un substrat apte au piquage une première nappe de tronçons de fil suivant une première direction, puis, éventuellement, une ou plusieurs autres nappes de tronçons de fil orientés suivant des directions différentes, en sorte de réaliser une séquence de dépose, puis, à effectuer éventuellement une ou plusieurs autres séquences de dépose de nappes, identiques ou non à la première séquence, chaque tronçon de fil étant, à chaque extrémité, fixé par piquage sans nouage dans ledit substrat à l'aide d'une aiguille, caractérisé en ce que le piquage aux deux extrémités de chaque tronçon est réalisé de manière indépendante à l'aide de deux aiguilles utilisant des fils distincts de celui des nappes, l'extrémité du tronçon de fil étant, dès l'arrivée de la tête de dépose à hauteur de son point de rebroussement, fixée par le fil de piquage, l'aiguille de piquage en position enfoncée dans le substrat faisant office provisoirement de picot d'accrochage du fil lors de la dépose du tronçon suivant, ladite aiguille demeurant enfoncée dans ledit substrat au moins jusqu'à l'enfoncement de l'aiguille de piquage de l'autre extrémité dudit tronçon suivant.

Un tel procédé permet d'utiliser pour le blocage des extrémités de chaque tronçon de fil, des fils de nature différente de celle des fils des nappes, les fils de blocage des deux extrémités pouvant être éventuellement différents en sorte d'être optimisés en fonction des applications envisagées.

Suivant un autre avantage important du procédé, chaque tronçon de fil déposé peut être parfaitement tenu et placé éventuellement en légère tension en étant tendu entre les deux aiguilles enfoncées dans le substrat.

Il est à noter que le procédé de l'invention permet d'optimiser mécaniquement les préformes en permettant le placement des tronçons de fil en des emplacements choisis en sorte d'obtenir des épaisseurs et/ou des profils de pièces composites finales évolutifs.

L'invention a également pour objet un dispositif pour la mise en oeuvre du procédé ci-dessus, comprenant un substrat apte au piquetage, aux formes et dimensions de la préforme à réaliser et des moyens de dépose des fils des nappes constituant ladite préforme, caractérisé en ce qu'il comporte, en outre, un jeu de deux aiguilles de piquage desdites nappes transversalement avec chacune son dispositif d'alimentation de fil, des moyens pour positionner les deux aiguilles en regard des emplacements de piquage sur le substrat, et des moyens pour synchroniser les mouvements d'enfoncement et de retrait des aiguilles d'une part entre eux, d'autre part avec la trajectoire desdits moyens de dépose des fils et, enfin, avec le déplacement relatif entre le substrat et lesdites aiguilles.

L'invention a également pour objet les préformes textiles tridimensionnelles obtenues à l'aide du procédé défini ci-dessus.

Il est à noter à ce propos que le substrat apte au piquetage, qui est généralement un matériau en mousse par exemple une mousse de polyuréthane, peut avantageusement être constitué par une préforme textile existante de forme et dimensions pouvant être évolutives et destinées à être intégrée à la préforme réalisée conformément au procédé de l'invention en superposition au substrat-préforme, la solidarisation entre les deux préformes étant assurée par ledit piquage.

On peut ainsi réaliser des pièces composites complexes d'épaisseur variable et de profil évolutif.

D'autres caractéristiques et avantages de l'invention ressortiront de la description qui va suivre d'un mode de mise en oeuvre dudit procédé, description donnée à titre d'exemple uniquement et en regard des dessins annexés sur lesquels :
- la figure 1 est une vue schématique partielle et en coupe d'une préforme textile multidimensionnelle réalisée conformément au procédé de l'invention ;
- la figure 2 illustre le cycle de tramage de la préforme de la figure 1 ;
- les figures 3a à 3e illustrent différentes séquences du cycle de tramage ;
- la figure 4 est une vue schématique partielle en perspective d'un dispositif pour la mise en oeuvre du procédé ;
- la figure 5 est une vue du seul mécanisme de tramage du dispositif de la figure 4, et
- la figure 6 est une vue du seul mécanisme de piquage dudit dispositif.

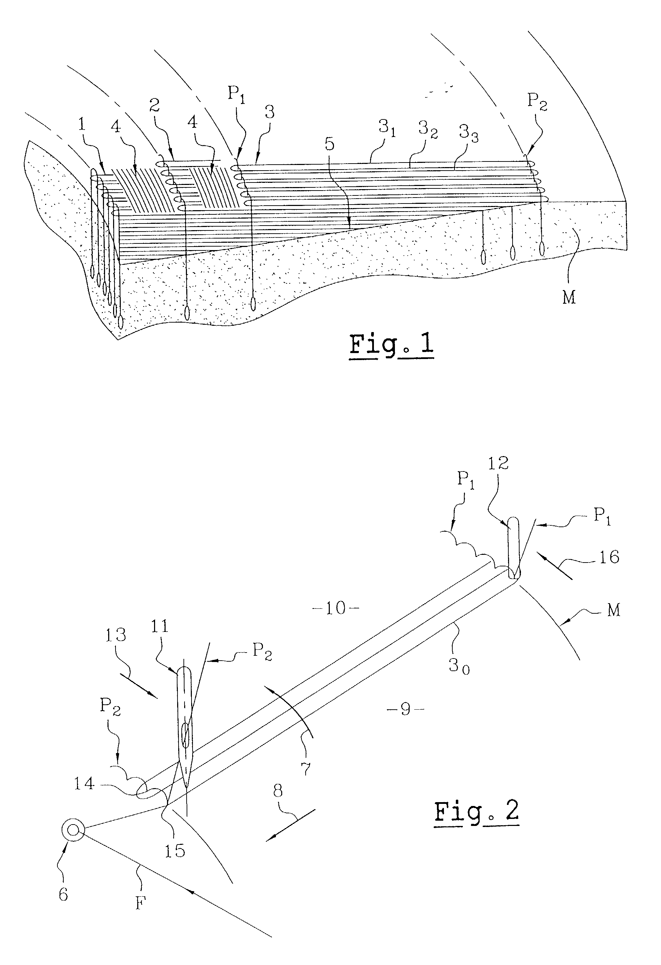

La figure 1 illustre un exemple de réalisation d'une préforme conformément au procédé de l'invention, ladite préforme étant constituée d'une structure de forme tronconique formée de nappes 1, 2, 3 de tronçons de fil parallèles, superposées tout en étant légèrement décalées axialement à la manière de tuiles d'une couverture.

Entre deux nappes est interposée une nappe 4 de fils disposés par bobinage orthogonalement aux tronçons de fil des nappes 1, 2, 3.

Une telle structure est décrite plus en détail par exemple dans le document FR 2 718 758 cité plus haut.

En M sur la figure 1 est symbolisé un mandrin dont la périphérie est constituée, à la manière connue, d'un matériau suffisamment rigide, mais souple, tel qu'une mousse de matière synthétique, notamment une mousse de polyuréthane.

La surface 5 du mandrin M est tronconique et reçoit les déposes successives de nappes, seulement trois nappes (1, 2, 3) de fils dits longitudinaux étant représentées sur la figure 1.

Chaque nappe 1, 2, 3 est constituée par la dépose, sensiblement parallèlement puisque la surface 5 est tronconique, de tronçons, par exemple 3₁, 3₂, 3₃, etc..., d'un même fil F dit de tramage, mis en place de manière conventionnelle à l'aide d'une tête de tramage dont on n'a représenté sur les figures 2 et suivantes, par souci de clarté, que l'oeillet de tramage 6.

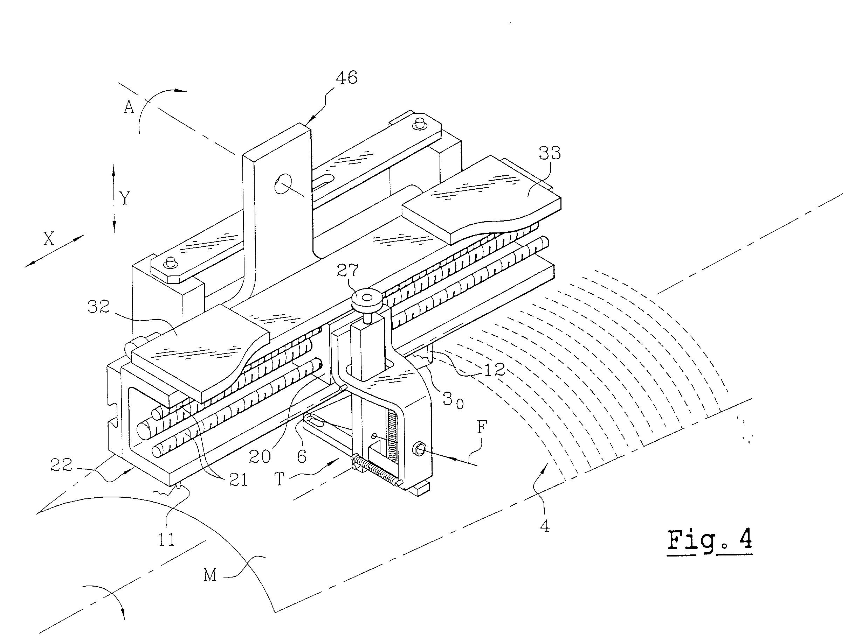

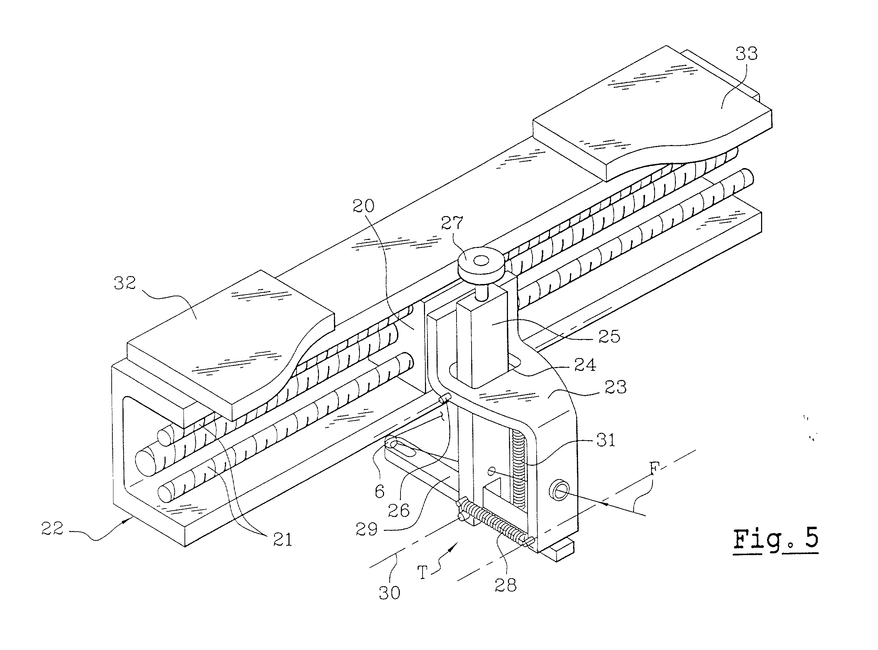

L'oeillet 6 de la tête de tramage est, comme on le verra plus en détail plus loin en référence aux figures 4 et 5, porté par un chariot mobile à va-et-vient dans le plan vertical axial du mandrin M, au-dessus de ce dernier.

Les tronçons de fil 3₁, 3₂, 3₃, etc... ont une longueur par exemple de quelques dizaines de centimètres, le fil de tramage F faisant des zigzags axiaux arrêtés à chaque extrémité par un fil faisant un point de piquage circonférentiel.

Ainsi, et conformément à l'invention, à l'arrière de la nappe déposée (3) les extrémités des tronçons 3₁, 3₂, 3₃, etc... sont arrêtées par un fil de piquage P₁, distinct du fil de tramage F, cependant qu'à l'avant de ladite nappe 3 les extrémités desdits tronçons sont arrêtés par un second fil de piquage P₂ également distinct du fil F. Le qualificatif arrière et avant des fils de piquage P₁, P₂ est déterminé suivant le sens (de la gauche vers la droite sur la figure 1) de dépose en superposition des nappes (1, 2, 3, etc...).

Un tel mode de piquage des bords opposés des nappes présente d'importants avantages.

C'est ainsi que les fils de piquage, P₁ et P₂, qui sont identiques ou non, peuvent être optimisés en considération de leur fonction. Par exemple, le fil de piquage avant P₂ qui n'a pour rôle que de tenir le pied du fil de tramage F et qui sera finalement éliminé par usinage interne de la préforme, pourra être constitué d'un matériau de performances réduites et peu coûteux.

Au contraire, le fil de piquage avant P₁ qui se trouve sur la face externe exposée de la préforme, sera choisi dans le cadre d'un compromis entre ses diverses fonctions et les contraintes existantes.

Plus précisément, ce fil P₁ doit d'une part tenir le fil de tramage F des nappes.

Ensuite, au plan thermique il ne doit pas créer dans la masse de la pièce en matériau composite finale de trous transversaux lors de l'échauffement de la surface de la pièce, ni créer de conductivité thermique transverse notable. Par ailleurs, le fil P1 doit avoir une bonne tenue mécanique aux chocs et doit aussi fiabiliser le matériau composite en évitant les délaminages des tuiles formées par les nappes, qui peuvent apparaître en fin de polymérisation du fait de la diminution de volume de la résine déjà durcie. Le choix du fil P₁ tiendra donc compte de ces diverses contingences.

Le procédé de l'invention permet également un gain de qualité sur l'étalement de chaque nappe par rapport à un blocage des nappes par piquage du fil de tramage à chaque extrémité de tronçon de fil déposé, car le fil de tramage F n'étant plus planté à ses deux extrémités, il n'est pas obligé de passer le trou rond de petit diamètre d'une aiguille de piquage.

Un gain de qualité est également obtenu sur l'architecture fibreuse de la préforme car le fil de piquage transversal P₁, P₂ sera choisi avec une section plus faible, d'environ un tiers par exemple, que celle du fil de tramage F, afin de diminuer la taille des fentes créées par le passage des fils.

Toujours en comparaison avec la technologie de piquage des extrémités des tronçons de fil de tramage, le procédé de l'invention conduit à séparer les trois fonctions : tramage et deux piquages indépendants. Chaque fonction peut ainsi être mécaniquement optimisée et des séquences constituant un cycle de tramage peuvent être mises en parallèle comme on le verra plus loin en décrivant un tel cycle en référence aux figures 2 et suivantes.

Enfin, le procédé permet un gain sur la fiabilité car le fil de tramage n'a plus besoin d'être piqué et donc ne risque plus de se casser lors de cette opération. Les aiguilles de piquage pourront utiliser des fils de type couture, torsadés et solides et être constituées d'aiguilles de couture standards, donc avec une excellente qualité pour un prix faible.

La figure 2 illustre un cycle de tramage ou, plus précisément, les différents mouvements des organes ou éléments se déplaçant lors de la réalisation d'une dépose de tronçons consécutifs du fil de tramage F.

Sur la figure 2, le mandrin M est vu contrairement à la figure 1 avec sa partie de diamètre réduit à gauche, où s'opère le piquage du fil avant P₂.

La rotation du mandrin M s'effectue suivant la flèche 7, de manière incrémentielle, chaque pas correspondant à l'intervalle entre deux tronçons consécutifs.

La flèche 8 indique le sens de déplacement de la tête de tramage, symbolisée par l'oeillet de tramage 6, pour la dépose du dernier tronçon représenté sur la figure 2.

La référence 9 désigne la partie amont du mandrin M qui est à recouvrir par des tronçons parallèles chacun contenu dans un plan axial du mandrin, et la référence 10 désigne la partie aval.

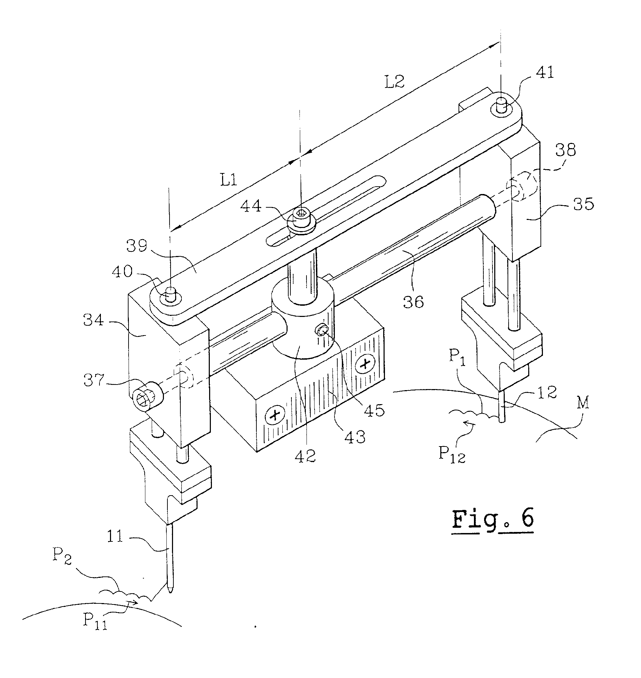

En 11 est repérée l'aiguille de piquage avant et en 12 l'aiguille de piquage arrière. Le mécanisme d'actionnement de ces aiguilles sera décrit plus en détail en référence aux figures 4 et 6.

La flèche 13 indique le mouvement de translation de l'aiguille 11 d'un pas correspondant à l'intervalle entre deux piquages avant, respectivement 14 et 15, cependant que la flèche 16 indique le même mouvement mais en sens inverse de l'aiguille arrière 12.

La figure 2 illustre l'initialisation d'un cycle de dépose de deux tronçons de fil de tramage F, le tronçon qui vient d'être mis en place étant désigné par la référence 3ₒ.

A cette étape initiale, l'oeillet 6 déplacé suivant la flèche 8 se trouve au-delà de la ligne de piquage avant P₂ et l'aiguille avant 11 est en position haute après réalisation du dernier piquage 15, alors que l'aiguille arrière 12 est en position enfoncée dans le matériau du mandrin M et contournée par le fil de tramage.

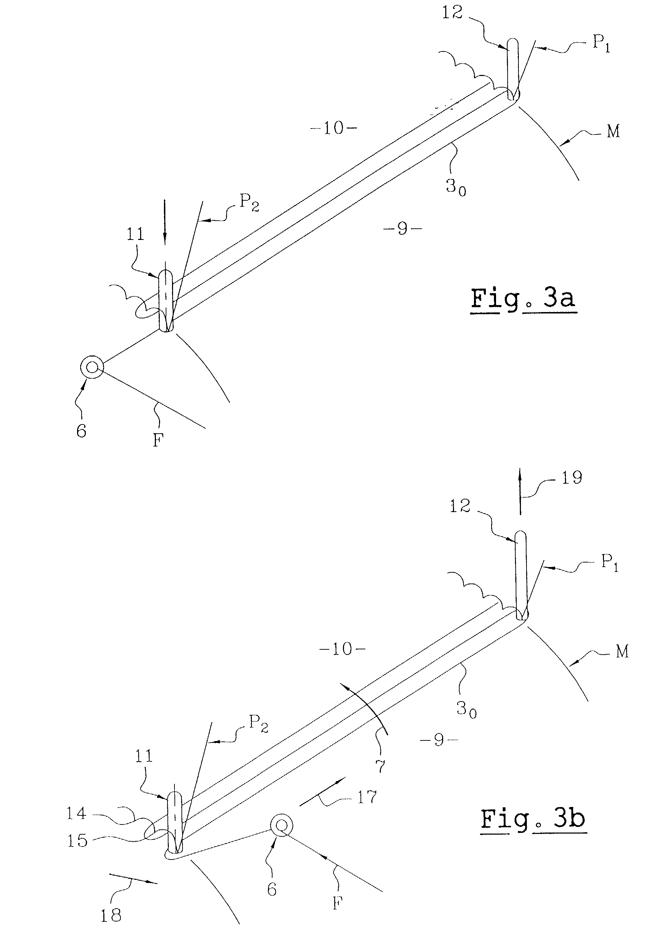

La première séquence (figure 3a) consiste à enfoncer l'aiguille avant 11 dans le mandrin M.

La séquence suivante (figure 3b) consiste à déplacer le chariot porte-tête de tramage (oeillet 6) vers l'arrière du mandrin suivant la flèche 17, après un léger déport (flèche 18) de ladite tête orthogonalement à l'axe du mandrin M. Le départ du chariot porte-tête de tramage commande la remontée (flèche 19) de l'aiguille arrière 12, puis la rotation (flèche 7) du mandrin.

Cette rotation entraîne vers l'aval 16 l'aiguille avant 11 enfoncée, ce qui commande un déplacement relatif vers l'amont 9 de l'aiguille arrière 12 par rapport audit mandrin.

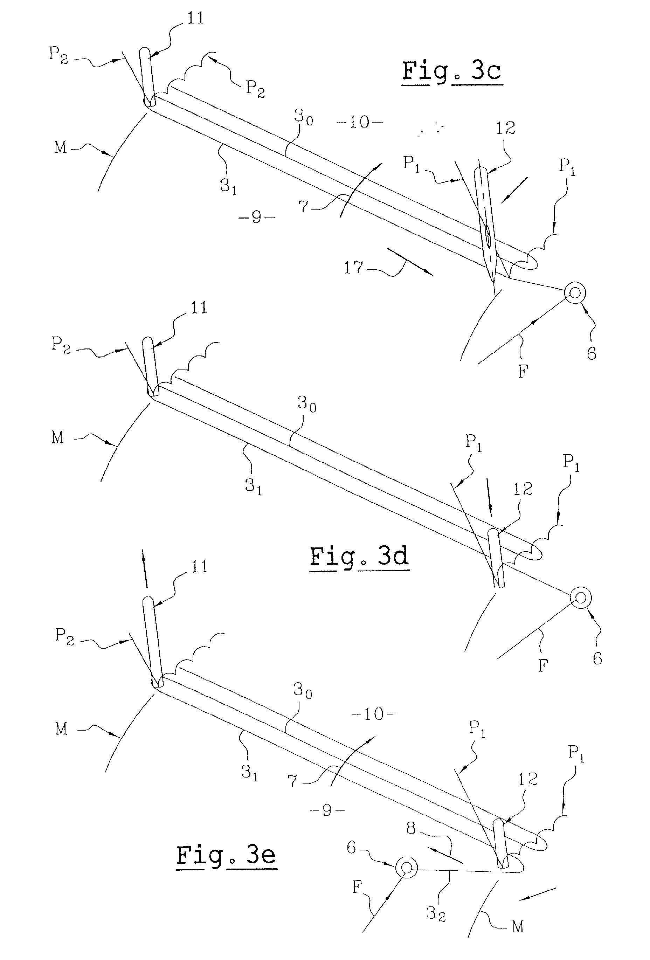

A la fin de la séquence 2 (figure 3c) est mis en place le tronçon 3₁, achevé lorsque l'oeillet 6 se trouve au-delà de la ligne de piquage arrière P₁ après être passé sous l'aiguille arrière 12.

A ce moment, (séquence 3, figure 3d), l'aiguille 12 plonge dans le mandrin M en sorte d'emprisonner à l'aide du fil P₁ le fil F.

Il est à noter que durant le trajet de dépose du tronçon 3₁ le fil F est parfaitement tenu par l'aiguille 11 enfoncée qu'il vient de contourner, ce qui permet d'effectuer audit fil F une dépose en légère tension.

Le fil F est également tenu, au démarrage de la dépose dudit tronçon, par l'aiguille 12 avant qu'elle ne se relève.

Il est à noter que cette dépose des tronçons de fil F peut se faire au contact à l'aide d'une tête appropriée.

Pendant cette séquence 3, l'aiguille arrière 12 et l'aiguille avant 11 sont toutes les deux enfoncées dans le mandrin M.

A la séquence 4 (figure 3e ), l'oeillet de tramage 6 repart vers l'avant (aiguille 11) après contournement de l'aiguille arrière 12 par le fil F en vue de la dépose du tronçon suivant 3₂. Le départ de l'oeillet 6 commande la remontée de l'aiguille avant 11 et la rotation (flèche 7) d'un pas du mandrin M. Cette rotation entraîne un déplacement vers l'aval 10 de l'aiguille arrière 12 enfoncée, qui commande le déplacement relatif vers l'amont 9 de l'aiguille avant 11 en position haute.

En fin de trajectoire de l'oeillet, on se retrouve dans la position illustrée par la figure 2.

Les diverses séquences décrites ci-dessus peuvent être simultanées en totalité ou en partie.

Il est à noter tout particulièrement qu'au cours de la dépose des tronçons de fil F les aiguilles 11 et 12 en position enfoncée font office de picots d'accrochage du fil de trame et contribuent ainsi à un placement précis et éventuellement tendu desdits tronçons de fil constituant la nappe.

Le cycle ainsi décrit se répète jusqu'à recouvrement par la nappe de la totalité de la zone tronconique considérée du mandrin. Ensuite, une nappe de fils circonférentiels telle qu'illustrée en 4 sur la figure 1 est bobinée, puis une nouvelle tuile est réalisée par un tramage d'une nouvelle nappe telle que 3 avec un certain décalage axialement au mandrin M.

On va se reporter maintenant aux figures 4 à 6 pour décrire un mode de réalisation des moyens aptes à mettre en oeuvre le procédé.

Le dispositif représenté en figure 4 comprend deux mécanismes accolés et associés, à savoir un mécanisme de tramage représenté isolé en figure 5 et un mécanisme de piquage représenté isolé en figure 6.

Sur la figure 4, on a représenté symboliquement en M le mandrin, en 4 une nappe de fils circonférentiels, en F le fil de tramage dont un tronçon 3₀ est en cours de dépose le long d'une génératrice du mandrin M, grâce à une tête de tramage T portée par un chariot 20 susceptible de coulisser le long de deux glissières 21 d'un vérin sans tige 22 conventionnel. Le chariot 20 est entraîné par le piston du vérin 22 par une liaison magnétique au travers de la paroi du vérin dont les deux extrémités fermées ne sont pas, par souci de clarté, représentées sur les figures 4 et 5.

Sur le chariot 20 est fixée (figure 5) une pièce 23 en forme de Z munie d'une fenêtre 24 traversée par un support vertical 25 articulé sur la pièce 23 autour d'un axe 26 parallèle aux glissières 21.

L'extrémité supérieure du support 25 porte un galet 27 d'axe perpendiculaire à l'axe 26, cependant qu'à l'extrémité inférieure est accroché un ressort 28 également ancré à l'extrémité inférieure du support 25 et maintenant ce dernier plaqué contre la partie supérieure de la pièce 23.

Une lame 29 est montée sur l'extrémité inférieure fourchue du support 25 en étant articulée autour d'un axe 30 parallèle à l'axe 26.

L'avant de la lame 29 porte l'oeillet 6 de tramage, cependant qu'à l'arrière, ladite lame est maintenue en appui sur la pièce 23 par un ressort 31 de faible raideur.

Aux deux extrémités du vérin 22 sont fixées deux cames 32 et 33.

Lorsque le chariot 20 coulisse vers une extrémité, le galet 27 appui sur la came correspondante (par exemple 32) et fait pivoter la pièce 25 qui va alors déplacer la lame 29 et donc déporter latéralement l'oeillet 6 en sorte de placer le fil F sous l'aiguille 11 qui se trouve en position haute (figure 4).

Lors du retour, le déplacement inverse se produit et permet à l'oeillet 6 de ne pas accrocher l'aiguille 11 ou le support de cette dernière.

Le ressort 31 permet à l'oeillet 6 de frôler la surface sur laquelle il se déplace pour la dépose du fil, sans risque d'endommagement de cette surface.

Le mécanisme de piquage (figure 6) est constitué de deux vérins pneumatiques à double tige 34 et 35, portant les aiguilles respectivement 11 et 12. Chaque vérin est relié à une tige 36 par deux axes 37, 38 permettant une liberté en rotation.

Les parties supérieures des vérins 34, 35 sont reliées par une lame 39 par l'intermédiaire de deux liaisons élastiques 40 et 41.

La tige 36 est fixée de manière réglable sur un pivot support 42 lui-même fixé par l'intermédiaire de roulements à billes sur une platine 43. La lame 39 est fixée en partie supérieure du support 42 par une bague 44 avec un certain jeu pour permettre à la lame de tourner et coulisser par rapport au support 42.

Un tel mécanisme forme une structure déformable élastiquement et permettant deux rotations croisées : la première autour de l'axe du pivot 42 et la seconde perpendiculaire à la première autour des axes 37, 38. Il est à noter que la position du pivot 42 par rapport aux deux vérins 34, 35 peut être facilement modifiée en desserrant la vis 45 de fixation dudit pivot 42.

Les deux mécanismes des figures 5 et 6 sont accolés (figure 4) afin de faire correspondre la position de l'oeillet 6 par rapport aux extrémités des aiguilles 11 et 12 comme illustré par les figures 2 et 3a à 3e.

Ces deux mécanismes sont fixés sur un support commun 46 orientable en angle par rapport à la surface de dépose des fils.

Une machine à commande numérique à 4 axes assure : la rotation R du mandrin M, la translation en X parallèle à l'axe du mandrin, la translation radiale Y perpendiculaire à l'axe du mandrin, ainsi qu'un axe A de rotation perpendiculaire au plan XY pour réaliser en particulier des pièces rondes.

La commande numérique de cette machine lie les contacts actionnés par les déplacements des vérins 22, 34 et 35 et pilote les électrovannes alimentant ces vérins.

Lorsque le vérin 35 descend, il enfonce l'aiguille 12 dans le mandrin M. Cette action commande le déplacement du chariot 20 vers l'aiguille 11. Le départ du chariot 20 commande la remontée de l'aiguille 11 et la rotation du mandrin M.

La rotation de ce mandrin est de faible amplitude et entraîne l'aiguille 12 sur une faible distance appelée pas et symbolisée sur la figure 6 par le petit vecteur P₁₂.

Le déplacement du pas P₁₂ de l'aiguille 12 entraîne, du fait du mécanisme articulé de la figure 6, un déplacement en sens inverse de l'aiguille 11, en position haute, d'une distance ou pas P₁₁. Les pas P₁₁, P₁₂ sont liés par la relation P₁₁/P₁₂ = L₁/L₂ = D₁/D₂ dans laquelle : L₁ et L₂ sont les distances de chaque aiguille 11, 12 au pivot 42 et D₁ et D₂ sont les diamètres respectifs de piquage dans le cas de la réalisation d'une préforme conique ou cylindrique.

Il est à noter qu'au cours du déplacement du pas P₁₂ de l'aiguille 12, cette dernière sera également soumise à une petite rotation autour de l'axe 38, laquelle sera répercutée au vérin 34 via la lame 39 qui pivote autour de la bague 44.

A la fin de ses deux rotations, l'aiguille 11 est alors en place pour que le fil P₂ recouvre le fil F dès que le chariot 20 et la came 27 arrivent à hauteur de la came 32.

L'aiguille 11 va alors s'enfoncer, cette séquence correspondant au schéma de la figure 3a et étant suivie, comme illustré par la figure 3b, du déport suivant la flèche 18 de la tête de tramage consécutif au déplacement (flèche 17) de cette tête faisant échapper le galet 27 de la came 32.

Le procédé de l'invention s'applique bien entendu à la réalisation de tous types de préforme tridimensionnelles, qu'elles soient planes ou non, il suffit que le substrat apte au piquage et sur lequel sont réalisées les nappes soit de forme appropriée.

Dans la description qui précède, le substrat en question est constitué d'un matériau souple formant partie du mandrin. Il est aussi possible de constituer un tel substrat sous la forme d'une préforme textile existante, de forme et dimensions pouvant être variables et sur laquelle va être réalisée conformément au procédé de l'invention une seconde préforme textile à laquelle la première préforme sera intégrée pour donner une pièce composite finale à géométrie pouvant être évolutive.

A cours de la réalisation de la seconde préforme, la première préforme fera office de substrat souple permettant le piquage selon ledit procédé en sorte d'assurer à la fois la solidarisation des nappes de la seconde préforme et la solidarisation des deux préformes superposées.

La préforme de l'invention peut être constituée d'un empilage de nappes superposées sans décalage entre nappes et quelle que soit l'orientation des tronçons des différentes nappes.

On peut ainsi superposer plusieurs nappes à orientations différentes des tronçons de fil de tramage, cette superposition étant répétée éventuellement avec le même motif d'orientation ou non.

Il faut également noter que le procédé de l'invention permet d'optimiser mécaniquement les préformes en permettant le placement des tronçons de fils en des emplacements choisis en sorte d'obtenir des épaisseurs et/ou des profils de pièces composites finales évolutifs.

Par ailleurs, les fils de piquage P₁, P₂ sont des fils secs ou des fils pré-imprégnés.

## Revendications

1. Procédé de réalisation d'une préforme textile multidirectionnelle, dans lequel on dépose sur un substrat apte au piquage (M) une première nappe de tronçons de fil suivant une première direction, puis, éventuellement, une ou plusieurs autres nappes de tronçons de fil orientés suivant des directions différentes, en sorte de réaliser une séquence de dépose, puis, à effectuer éventuellement une ou plusieurs autres séquences de dépose de nappes, identiques ou non à la première séquence, chaque tronçon de fil (3₁, 3₂, 3₃) étant, à chaque extrémité, fixé par piquage sans nouage dans ledit substrat (M) à l'aide d'une aiguille (11, 12), **caractérisé en ce que** le piquage aux deux extrémités de chaque tronçon (3₁, 3₂, 3₃) est réalisé de manière indépendante à l'aide de deux aiguilles (11, 12) utilisant des fils distincts (P₁, P₂) de celui des nappes (1, 2, 3), l'extrémité du tronçon de fil étant, dès l'arrivée de la tête de dépose à hauteur de son point de rebroussement, fixée par le fil de piquage, l'aiguille de piquage en position enfoncée dans le substrat faisant office provisoirement de picot d'accrochage du fil lors de la dépose du tronçon suivant, ladite aiguille demeurant enfoncée dans ledit substrat au moins jusqu'à l'enfoncement de l'aiguille de piquage de l'autre extrémité dudit tronçon suivant.

2. Procédé suivant la revendication 1, **caractérisé en ce qu'**on utilise comme fil de piquage (P₁, P₂) des fils de caractéristiques et propriétés différentes.

3. Procédé suivant la revendication 1 ou 2, **caractérisé en ce que** la dépose desdits tronçons (3₁, 3₂, 3₃) est effectuée au contact et/ou sous légère tension.

4. Procédé suivant l'une des revendications 1 à 3, **caractérisé en ce que** ledit substrat apte au piquage est un matériau constitué d'une mousse de matière synthétique.

5. Procédé suivant l'une des revendications 1 à 3, **caractérisé en ce que** ledit substrat apte au piquage est une préforme textile préalablement réalisée.

6. Dispositif pour la mise en oeuvre du procédé selon l'une des revendications 1 à 5, comprenant un substrat apte au piquage (M) aux forme et dimensions de la préforme à réaliser et des moyens (6) de dépose des fils (F) des nappes (1, 2, 3) constituant ladite préforme, **caractérisé en ce qu'**il comporte, en outre, un jeu de deux aiguilles (11, 12) de piquage desdites nappes (1, 2, 3) transversalement avec chacune son dispositif d'alimentation de fil (P₁, P₂), des moyens pour positionner les deux aiguilles en regard des emplacements de piquage sur le substrat (M), et des moyens pour synchroniser les mouvements d'enfoncement et de retrait des aiguilles (11, 12) d'une part entre eux, d'autre part avec la trajectoire desdits moyens (6) de dépose des fils (F) et, enfin, avec le déplacement relatif entre le substrat (M) et lesdites aiguilles (11, 12).

7. dispositif suivant la revendication 6, **caractérisé en ce que** lesdits moyens de dépose des fils (F) sont constitués d'une tête de tramage (T) munie d'un oeillet de tramage (6) et montée sur un chariot (20) mobile le long de glissières (21) sous l'action d'un vérin (22) et de moyens (23 à 33) pour, en fin de course dudit chariot (20) à chaque extrémité desdites glissières (21), déporter latéralement provisoirement ledit oeillet de tramage (6).

8. Dispositif suivant la revendication 6, **caractérisé en ce que** ledit jeu de deux aiguilles (11, 12) est monté à l'extrémité de vérins (34, 35) reliés entre eux par une structure (36, 44) déformable élastiquement et permettant une rotation des aiguilles (11, 12) simultanée et en sens inverse autour d'un axe commun (37, 38) perpendiculaire à celui desdites aiguilles, ainsi qu'une rotation simultanée des aiguilles autour d'un axe (42) parallèle à celui desdites aiguilles.

9. Préforme textile tridimensionnelle obtenue conformément au procédé selon l'une quelconque des revendications 1 à 5.
